# EUROPEAN PATENT APPLICATION

(11) **EP 1 679 895 A1**
(43) Date of publication of application: **12.07.2006**
(21) Application number: 04788102.4
(22) Date of filing: 24.09.2004
(51) Int. Cl.: H04N 7/173, H04L 12/56, H04M 11/00

(54) **MEDIUM SIGNAL TRANSMISSION METHOD, RECEPTION METHOD, TRANSMISSION/RECEPTION METHOD, AND DEVICE**

(30) Priority: 16.10.2003 JP 2003355978
(71) Applicant: NEC CORPORATION, Minato-ku, Tokyo 108-8001 (JP)
(72) Inventor: OZAWA, Kazunori, Tokyo 108-8001 (JP)
(74) Representative: Glawe, Delfs, Moll
(86) International application number: PCT/JP2004/013943
(87) International publication number: WO 2005/039180

(57) **Abstract**

In the transmission and reception of a medium signal, a device in accordance with the present invention reduces a medium signal deterioration generated by a data loss, caused by a bandwidth fluctuation in a wired IP network or a wireless network or by a wireless handover, and minimizes an increase in the amount of processing that is required for the signal deterioration. In a bidirectional medium transmission and reception, the reception side has a control unit 108 that monitors a storage amount of a buffer 111 in which a medium signal obtained by decoding a stream by a decoder 112 is stored, and transmits a control signal to a transmission line if the storage amount of the buffer exceeds or falls below a predetermined threshold, and the transmission side has a control unit 102 that encodes a medium signal and outputs a stream and, if a control signal is received from the transmission line, changes the compression rate of an encoder 104.

## Description

### TECHNICAL FIELD

The present invention relates to a medium signal transmission method, reception method, transmission/reception method, and device, and more particularly to a method, device, and program suitable for the bidirectional transmission and reception of medium signals (audio and image) over a wired transmission line or a wireless transmission line.

### BACKGROUND ART

Recently, a method for transmitting highly compressed encoded data is used in many cases as a method for efficiently transmitting audio and video data.

There are many methods for distributing audio/video compressed coded information to an IP (Internet Protocol) network utilizing packet-switching system.

In case wherein such a transmission/reception of audio/video data is carried out over a wired IP network or an IP network that includes wireless zones, if an IP network is congested or if a wireless error or loss is generated in a wireless zone, a request to retransmit the lost data is usually sent to request the transmission side to retransmit the corresponding packet.

As a video conference terminal that improves the image quality by controlling the ratio of the audio bandwidth to the total communication bandwidth, a configuration is disclosed in which the encoding rate of an audio encoder is controlled based both on the image encoded data size, detected based on the usage capacity of the image encoding data buffer, and on the audio data encoding rate detected based on the usage capacity of the audio encoding data buffer (for example, see Patent Document 1 below). An AV transmission/reception system is also known that monitors the amount of data stored in the receive buffer and, based on the relation between the stored data amount and the threshold, varies the receive clock frequency (for example, see Patent Document 2).

Patent Document 1: Japanese Patent Kokai Publication No. JP-P2001-333401A (page 4, FIG. 1)
Patent Document 2: Japanese Patent Kokai Publication No. JP-P2002-165148 (pages 3-4, FIG. 4)

### DISCLOSURE OF THE INVENTION

### PROBLEMS TO BE SOLVED BY THE INVENTION

However, during audio/image communication (for example, videophone), data cannot usually be retransmitted because the retransmission involves a time delay. This generates a problem that, when a packet is lost, the reception side suffers from quality degradation.

In addition, when an image data reception device moves out of a wireless area (cell) and moves to an adjacent wireless area, a handover occurs. During this handover period, the data reception is stopped and a large amount of data is lost. This exhausts the output buffer of the reception device, causing the device to stop or freeze the video image screen and to interrupt or mute the audio.

The problems similar to those described above also occur not only when a handover occurs between wireless zones but also when the bandwidth varies from time to time in a wired IP network.

In view of the foregoing, it is an object of the present invention to provide a method, device, and computer program for minimizing the degradation of reception quality when the wait varies depending upon the time in an IP network, which includes a wired IP network and wireless zones, when medium signals such as videos or audios are distributed.

It is another object of the present invention to provide a method, device, and computer program for minimizing the degradation of reception quality even if a handover occurs in wireless zones.

A transmission device according to one aspect of the present invention, which achieves the above objects, comprises an encoder unit that outputs a stream, obtained by receiving and encoding a medium signal, to a transmission line; and a control unit that controls the encoder unit to change a compression rate thereof and output the stream, when a predetermined control signal is received from the transmission line.

A transmission device according to another aspect of the present invention comprises an encoder unit that outputs a stream obtained by receiving and encoding a medium signal; and an output control unit that receives the stream output from said encoder unit, and that performs control, when a predetermined control signal is received from said transmission line, to output the stream to the transmission line at a time interval different from a time interval at which the medium signal has been encoded by said encoder unit.

A reception device according to one aspect of the present invention comprises a decoder unit that decodes a stream received from a transmission line; a buffer unit that stores a medium signal decoded and produced by the decoder unit; and a control unit that monitors a storage amount of the buffer unit, and that outputs a control signal to the transmission line if the storage amount of the buffer unit exceeds or falls below a predetermined threshold.

A reception device according to another aspect of the present invention comprises a decoder unit that decodes a stream received from a transmission line; a monitor unit that monitors a reception status of the transmission line; and a control unit that outputs a control signal to the transmission line based on a notification from the monitor unit if the reception status becomes a predetermined status.

A transmission/reception device according to one aspect of the present invention comprises a decoder unit that receives and decodes a stream; a buffer unit that stores a decoded medium signal; a first control unit that monitors an buffer amount, and that outputs a control signal to a transmission line if the buffer amount exceeds or falls below a predetermined threshold; an encoder unit that encodes a medium signal and outputs a stream; and a second control unit that controls the encoder to change a rate and output the stream, when the control signal is received from the transmission line.

A transmission/reception device according to another aspect of the present invention comprises a buffer unit that receives and decodes a stream and stores a decoded medium signal; a first control unit that monitors a buffer amount and that outputs a control signal to a transmission line if the buffer amount exceeds or falls below a predetermined threshold; and a second control unit that encodes a medium signal and outputs a stream, and that, when the control signal is received, outputs the stream at a time interval different from a time interval at which the medium signal has been encoded by the encoder unit.

A transmission/reception device according to another aspect of the present invention comprises a decoder unit that receives and decodes a stream; a monitor unit that monitors a reception status; a first control unit that that outputs a control signal to a transmission line if the reception status becomes a predetermined status; an encoder unit that encodes a medium signal and outputs a stream; and a second control unit that outputs a stream at a time interval different from a time interval at which the input signal is encoded when the control signal is received from the transmission line.

A transmission method according to the present invention is a method for outputting a stream, obtained by receiving and encoding a medium signal, to a transmission line, wherein the method may be controlled in such a way that the stream is output by changing a compression rate of the encoding processing when a predetermined control signal is received from the transmission line, or in such a way the stream is output to the transmission line at a time interval different from a time interval at which the medium signal has been encoded when the predetermined control signal is received from the transmission line.

A reception method according to the present invention comprises the steps of receiving and decoding a stream; monitoring a storage amount of a buffer unit in which a medium signal obtained by the decoding is stored, and outputting a control signal to the transmission line if the storage amount of the buffer unit exceeds or falls below a predetermined threshold or based on a monitoring result of a reception status.

### MERITORIOUS EFFECT OF THE INVENTION

The present invention minimizes a distortion in the image quality or sound quality in the bidirectional wireless communication of moving images even if a handover occurs in a wireless interval on an image reception device side or the reception status changes over time because of congestion or a packet loss in a wireless network or an IP network.

In addition, the present invention, which gives the effect described above, reduces the processing amount on both the transmission side and the reception side.

### BRIEF DESCRIPTION OF THE DRAWINGS

FIG. 1 is a diagram showing the configuration of an image data distribution device (transmission device) in a first embodiment of the present invention.
FIG. 2 is a diagram showing the configuration of an image data distribution device (transmission device) in a second embodiment of the present invention.
FIG. 3 is a diagram showing the configuration of an image data distribution system in a third embodiment of the present invention.
FIG. 4 is a diagram showing the configuration of an image data distribution system in a fourth embodiment of the present invention.
FIG. 5 is a diagram showing the configuration of an image data distribution system in a fifth embodiment of the present invention.
FIG. 6 is a diagram showing the configuration of an image data distribution system in a sixth embodiment of the present invention.

### EXPLANATION OF NUMERALS

- 101, 101A: an image data distribution device
- 102: control unit
- 104: encoder
- 106: transmission line
- 107,107A: image data reception device
- 108: control unit
- 109: image encoded data reception unit
- 110: wireless status determination unit
- 111: buffer unit
- 112: decoder
- 120: image signal
- 121, 122, 123: control signal
- 204: image stream output control unit

### BEST MODE FOR CARRYING OUT THE INVENTION

Embodiments of the present invention will be described. The transmission side of a transmission/reception device in one embodiment of the present invention comprises an encoder (102) that receives and encodes a medium signal, including images and/or audios, as an input, and create distribution data to outputs the distribution data as a stream; and a control unit 102 that changes the compression rate of the encoder (102) when a control signal (121) is received from a transmission line (106).

In another embodiment of the present invention, the transmission side may be configured to have an output control unit (204) that controls to output the stream at a time interval different from a time interval at which the input (source) is encoded, when a control signal (121) is received from a transmission line (106).

In one embodiment of the present invention, the reception side comprises a control unit (108) that monitors the storage amount of a buffer unit (111) that stores a medium signal obtained on decoding a stream by a decoder (112), and outputs a control signal (123) to a transmission line if the storage amount of the buffer unit exceeds or falls below a predetermined threshold.

In another embodiment of the present invention, the reception side may monitor a reception status and, based on the monitor result, outputs a control signal (123) to a transmission line when a handover is detected based.

The following describes a transmission method in one embodiment of the present invention. The transmission method in one embodiment of the present invention includes steps A1 and A2 described below.

Step A1: A medium signal is received and encoded by an encoder to create distribution data and output a stream.

Step A2: When a predetermined control signal is received from a transmission line, control is performed to change the compression rate of the encoder and output the stream.

A transmission method in another embodiment of the present invention includes steps A11 and A12 described below.

Step A11: A medium signal is received and encoded by an encoder to create distribution data and output a stream.

A12: In case of outputting the stream encoded by the encoder to a transmission line, when a predetermined control signal is received from the transmission line, output control of the stream is performed so that the stream is output at a time interval different from a time interval at which the received media signal has been encoded by the encoder.

A reception method in one embodiment of the present invention includes steps B1 and B2 described below.

Step B1: A stream transmitted to a transmission line is received and the stream is decoded.

Step B2: The storage amount of a buffer that stores a medium signal, obtained by the decoding, is monitored and a control signal to the transmission line is output if the storage amount of the buffer exceeds or falls below a predetermined threshold.

A reception method in another embodiment of the present invention includes steps B11 and B12 described below.

Step B11: A stream transmitted to a transmission line is received and the stream is decoded.

Step B12: The reception status of the transmission line is monitored and, if the reception status becomes a predetermined status, a control signal is output to the transmission line based on a notification from the monitor unit.

Another transmission/reception method according to the present invention is suitable for bidirectional medium transmission/reception, the transmission side includes steps A1 and A2 or A11 and A12, described above, and the reception side includes steps B1 and B2 or steps B11 and B12.

The processing/function of steps A1, A2, A11, and A12 may be implemented by a program executed by a computer (or processor) on the transmission side.

The processing/function of steps B1, B2, B11, and B12 may be implemented by a program executed by a computer (or processor) on the transmission side.

### EMBODIMENTS

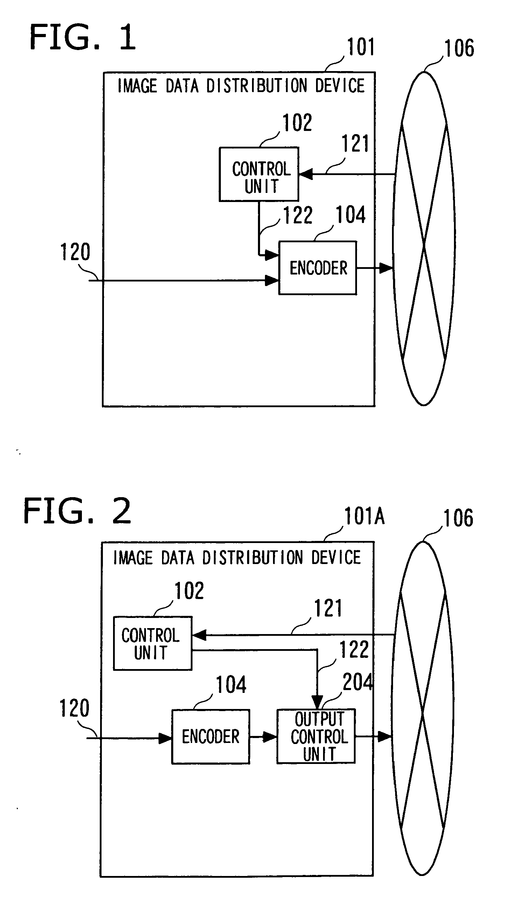

The following describes the present invention with reference to the attached drawings to describe it more in detail. FIG. 1 is a diagram showing the configuration of a first embodiment of the present invention. It is assumed that image and/or audio data is transmitted by UDP/IP via a transmission line 106 on which IP (Internet Protocol) is being built on a wireless physical layer. An image data reception device not shown is, for example, a client terminal, connected to a wireless IP network, to receive image encoded data using UDP (User Datagram Protocol)/IP.

Referring to FIG. 1, an image data distribution (transmission) device 101 comprises an encoder 104 for encoding a received image signal and a control unit 102. The encoder 104 (also called a "streaming encoder") encodes a received image signal 120 at a predetermined bit rate and outputs it to the transmission line 106 as a stream. The image signal or the like received may be a file or, in case of live distribution, data from a camera or the like.

When a control signal 121 is received from the transmission line 106, the control unit 102 outputs a control signal 122, which changes the bit rate of image data, to the encoder 104, and the encoder 104 changes the encoding bit rate (compression rate) of the image data (for example, changes the rate to a lower bit rate) according to the control signal 122 and then outputs the image data to the transmission line 106. In this embodiment, the image data reception device, not shown, transmits the control signal to the transmission line 106 when there is a possibility that the receive buffer of image encoded data is going to be exhausted. The transmission line 106, on which IP (Internet Protocol) is assumed to be built on the wireless physical layer, uses UDP/IP as the transmission protocol. As the control signal, RTCP (Real Time Transport Protocol) defined by IETF (Internet Engineering Task Force) as RFC, an extended version of RTCP being drafted by IETF, or RTSP (Real Time Streaming Protocol) defined by IETF as RFC (Request For Comments) may be used. This applies also to the embodiments given below.

Although the transmission device (distribution device) and the reception device are described as separate devices in FIG. 1 to simplify the description, it is also possible that both the transmission function and the reception function are mounted in one device as a transmission/reception device. In this case, both functions of the transmission device and the reception device described in this embodiment are implemented by one device. This applies also to the embodiments given below.

FIG. 2 is a diagram showing the configuration of a second embodiment of the present invention. Referring to FIG. 2, an image data distribution device 101A in this embodiment has the configuration of the image data distribution device 101 in FIG. 1 to which an image stream output control unit 204 is added. An encoder 104 encodes a received image signal at a predetermined bit rate and outputs the image signal to a transmission line 106 as a stream. When a control signal 121 is received from the transmission line 106, the control unit 102 outputs a control signal 122 to the image stream output control unit 204.

When the control signal 122 is received from the control unit 102, the image stream output control unit 204 reads the image encoded data at a time interval T at which the data is encoded by the encoder 104 or at a time interval T' different from the clock T, or with a different clock T', and outputs the data to the transmission line 106.

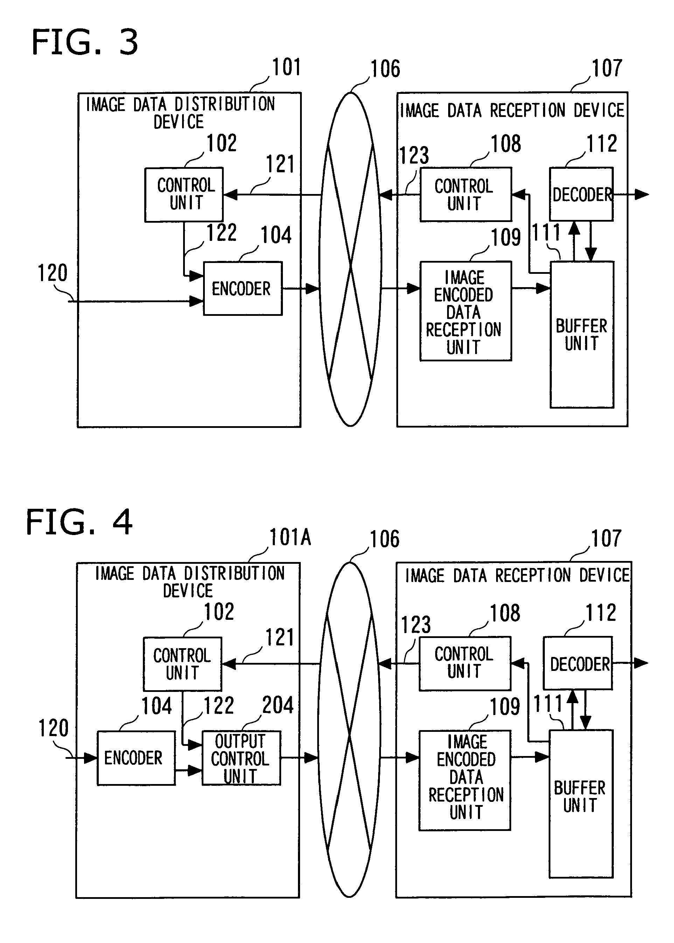

FIG. 3 is a diagram showing the configuration of a third embodiment of the present invention. Referring to FIG. 3, an image data distribution device 101 has a configuration similar to that of the image data distribution device 101 shown in FIG. 1.

An image data reception device 107 receives image encoded data from a transmission line 106 via an image encoded data reception unit 109, temporarily stores the data in a buffer unit (storage device) 111 and, after absorbing packet fluctuation and delay in arrival of packet on the transmission line 106, outputs the data to a decoder 112. The buffer unit 111 has a buffer (storage unit) for storing the medium signal decoded by the decoder 112.

Although the buffer unit 111, in which the received image encoded data is temporarily stored, is provided externally to the image encoded data reception unit 109 for the clarity of description, it is of course possible to configure a buffer, in which image encoded data is temporarily stored, in the image encoded data reception unit 109. In this case, the image encoded data is supplied from the image encoded data reception unit 109 to the decoder 112, and the buffer unit 111 in FIG. 3 has a buffer only for storing the medium signal decoded by the decoder 112. The image signal decoded by the decoder 112 is displayed on a display device not shown.

A control unit 108 measures the storage amount of a buffer, in which the decoded medium signal is stored, at a predetermined time interval and, when the storage amount of the buffer in which the decoded medium signal is stored is going to be exhausted, transmits a control signal 123 to the transmission line 106. It is also possible for the control unit 108 to compare the storage amount of the buffer, in which the decoded medium signal is stored, with a predetermined upper or lower threshold to determine if the buffer is exhausted. As a modification of this embodiment, it is also possible that the control unit 108 controls the output of the control signal 123 based on the storage amount of the buffer in which the received image encoded data is temporarily stored.

When a control signal 121 is received from the image data reception device 107 via the transmission line 106, a control unit 102 of the image data distribution device 101 outputs a control signal 122 to an encoder 104, changes the bit rate (compression rate) of the encoder 104 (for example, to a lower bit rate), and outputs the data to the transmission line 106. Again, in this embodiment, the transmission line 106 on which IP (Internet Protocol) is assumed to be built on the wireless physical layer, uses UDP/IP as the transmission protocol. Note that the control signal 121 received by the image data distribution device 101 and the control signal 123 transmitted from the image data reception device 107 are the same control signal.

FIG. 4 is a diagram showing the configuration of a fourth embodiment of the present invention. Referring to FIG. 4, an image data reception device 107 has a configuration similar to that of the image data reception device 107 shown in FIG. 3. An image data distribution device 101A shown in FIG. 4 has a configuration similar to that of the image data distribution device 101A shown in FIG. 2.

A control unit 108 of the image data reception device 107 measures the buffer amount of an encoded data buffer unit 111 at a predetermined time interval and, when the encoded data buffer unit 111 is going to be exhausted, transmits a control signal 123 to a transmission line 106.

When a control signal 121 is received from the image data reception device 107 via the transmission line 106, a control unit 102 of the image data distribution device 101 outputs a control signal 122 to an image stream output control unit 204. The image stream output control unit 204 reads the image encoded data at a time interval T at which the data is encoded by an encoder 104, or at a time interval T' different from the clock T, or with a different clock T', and outputs the data to the transmission line 106. Note that, in FIG. 4, the control signal 121 received by the image data distribution device 101A and the control signal 123 transmitted from the image data reception device 107 are the same control signal.

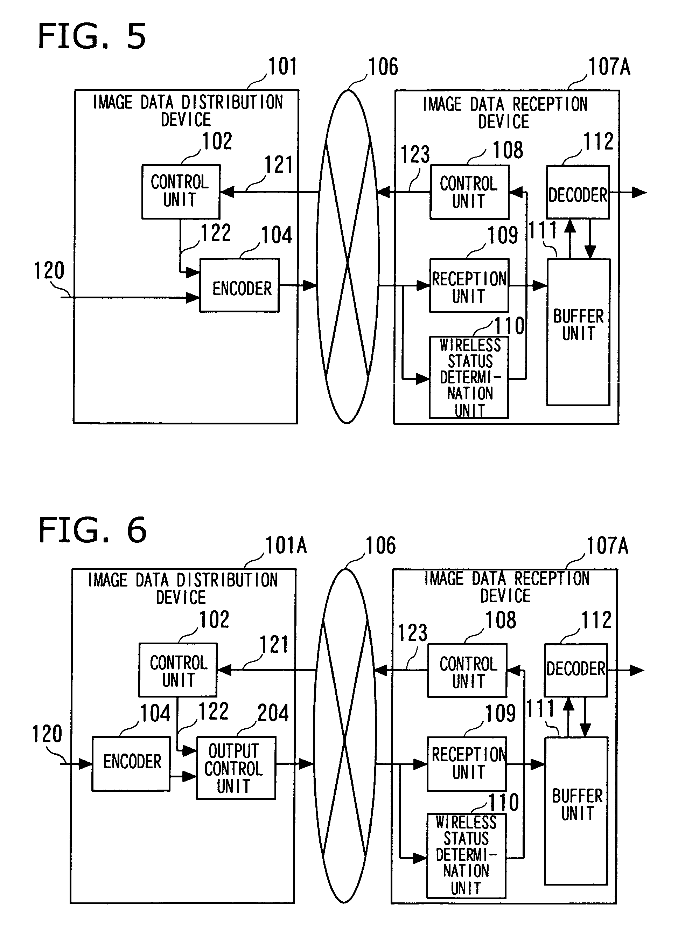

FIG. 5 is a diagram showing the configuration of a fifth embodiment of the present invention. Referring to FIG. 5, an image data distribution device 101 has a configuration similar to that of the image data distribution device 101 in FIG. 1. The configuration of an image data reception device 107A is similar to that of the image data reception device 107 shown in FIG. 3 except that a wireless status determination unit 110 is added.

The wireless status determination unit 110 of the image data reception device 107A monitors the wireless reception status of a transmission line 106 and, when the reception status becomes a predetermined status, notifies a control unit 108 about the status, and causes the control unit 108 to output a control signal 123 to the transmission line 106. When a control signal 121 (buffer exhaustion status) is received from the image data reception device 107A via the transmission line 106, a control unit 102 of the image data distribution device 101 outputs a control signal 122 to an encoder 104, changes the encoding bit rate (compression rate) of the encoder 104, and outputs the data to the transmission line 106. In response to the control signal 122, the encoder 104 changes the bit rate, for example, to a lower bit rate. In FIG. 5, note that the control signal 121 received by the image data distribution device 101 and the control signal 123 transmitted from the image data reception device 107A are the same control signal.

FIG. 6 is a diagram showing the configuration of a sixth embodiment of the present invention. Referring to FIG. 6, an image data distribution device 101A has a configuration similar to that of the image data distribution device 101A shown in FIG. 2. An image data reception device 107A is similar to the image data reception device 107A shown in FIG. 5.

A wireless status determination unit 110 of the image data reception device 107A monitors the wireless reception status of a transmission line 106 and, when the reception status becomes a predetermined status, notifies a control unit 108 about the status, and causes the control unit 108 to output a control signal 123 to the transmission line 106. When a control signal 121 is received from the image data reception device 107A via the transmission line 106, a control unit 102 of the image data distribution device 101A outputs a control signal 122 to an image stream output control unit 204. The image stream output control unit 204 reads the image encoded data at a time interval T at which the data is encoded by the encoder 104 or at a time interval T' different from the clock T, or with a different clock T', and outputs the data to the transmission line 106. In FIG. 6, note that the control signal 121 received by the image data distribution device 101A and the control signal 123 transmitted from the image data reception device 107A are the same control signal.

The wireless status determination unit 110 may be composed by a handover determination unit that monitors the wireless reception status of the transmission line 106 and notifies the status to the control unit 108, if the wireless status indicates that a handover that determines a handover from the current wireless area (cell) to an adjacent cell occurs.

Although the present invention has been described with reference to the preferred embodiments given above, it is apparent that the present invention is not limited to the configuration of the above embodiments but that various modifications and changes in accordance with the principle of the present invention are included.

## Claims

1. A transmission device comprising:
an encoder unit for outputting a stream, obtained by receiving and encoding a medium signal, to a transmission line; and
a control unit for controlling said encoder unit to change a compression rate thereof and output the stream, when a control signal is received from said transmission line.

2. A transmission device comprising:
an encoder unit for outputting a stream, obtained by receiving and encoding a medium signal; and
an output control unit for receiving the stream output from said encoder unit, said output control unit performing control, when a control signal is received from a transmission line, to output the stream to the transmission line at a time interval different from a time interval at which the medium signal has been encoded by said encoder unit.

3. A reception device comprising:
a decoder unit for decoding a stream received from a transmission line;
a buffer unit for storing a medium signal decoded and produced by said decoder unit; and
a control unit for monitoring a storage amount of said buffer unit, said control unit outputting a control signal to said transmission line if the storage amount exceeds or falls below a predetermined threshold.

4. A reception device comprising:
a decoder unit for decoding a stream received from a transmission line;
a monitor unit for monitoring a reception status of said transmission line; and
a control unit for outputting a control signal to said transmission line based on a notification from said monitor unit, if the reception status becomes a predetermined status.

5. The reception device according to claim 4, wherein, when a wireless status of said transmission line indicates a handover from a current wireless area to an adjacent area, said monitor unit notifies the status to said control unit.

6. A transmission/reception device comprising:
a decoder unit for decoding a stream received from a transmission line;
a buffer unit for storing a medium signal, decoded and produced by said decoder unit;
a first control unit for monitoring a storage amount of said buffer unit, said first control unit outputting a control signal to said transmission line, if the storage amount exceeds or falls below a predetermined threshold;
an encoder unit for outputting a stream, obtained by receiving and encoding a medium signal, to said transmission line; and
a second control unit for controlling said encoder unit to change a compression rate thereof and output the stream, when the control signal is received from said transmission line.

7. A transmission/reception device comprising:
a decoder unit for decoding a stream received from a transmission line;
a buffer unit for storing a medium signal decoded and produced by said decoder unit;
a first control unit for monitoring a storage amount of said buffer unit, said first control unit outputting a control signal to said transmission line, if the storage amount exceeds or falls below a predetermined threshold;
an encoder unit for outputting a stream obtained by receiving and encoding a medium signal; and
a second control unit for receiving the stream output from said encoder unit, said second control unit performing control to output the stream to said transmission line at a time interval different from a time interval at which the medium signal has been encoded by said encoder unit, when the control signal is received from said transmission line.

8. A transmission/reception device comprising:
a decoder unit for decoding a stream received from a transmission line;
a monitor unit for monitoring a reception status of said transmission line;
a first control unit for outputting a control signal to said transmission line based on a notification from said monitor unit if the reception status becomes a predetermined status;
an encoder unit for outputting a stream, obtained by receiving and encoding a medium signal, to said transmission line; and
a second control unit for controlling said encoder unit to change a compression rate thereof and output the stream when the control signal is received from said transmission line.

9. A transmission/reception device comprising:
a decoder unit for decoding a stream received from a transmission line;
a monitor unit for monitoring a reception status of said transmission line;
a first control unit for outputting a control signal to said transmission line based on a notification from said monitor unit if the reception status becomes a predetermined status;
an encoder unit for outputting a stream, obtained by receiving and encoding a medium signal; and
a second control unit for receiving the stream output from said encoder unit, said second control unit performing control to output the stream to said transmission line at a time interval different from a time interval at which the medium signal has been encoded by said encoder unit, when the control signal is received from said transmission line.

10. The transmission/reception device according to claim 8 or 9, wherein, when a wireless status of said transmission line indicates a handover from a current wireless area to an adjacent area, said monitor unit notifies the status to said first control unit.

11. A transmission method comprising the steps of:
outputting a stream, obtained by receiving and encoding a medium signal, to a transmission line; and
performing control to output the stream by changing a compression rate of said encoding processing, when a predetermined control signal is received from said transmission line.

12. A transmission method comprising the steps of:
outputting a stream, obtained by receiving and encoding a medium signal; and
when outputting the stream obtained by said encoding to a transmission line, performing output control of stream, on receipt of a predetermined control signal from said transmission line, so that the stream is output to said transmission line at a time interval different from a time interval at which the medium signal has been encoded.

13. A reception method comprising the steps of:
decoding a stream received from a transmission line; and
monitoring a storage amount of a buffer unit, in which a medium signal obtained by the decoding is stored, and outputting a control signal to said transmission line, if the storage amount exceeds or falls below a predetermined threshold.

14. A reception method comprising the steps of:
decoding a stream received from a transmission line; and
monitoring a reception status of said transmission line and outputting a control signal to said transmission line, if the reception status becomes a predetermined status.

15. The reception method according to claim 14, wherein, when a wireless status of said transmission line indicates a handover from a current wireless area to an adjacent cell, the control signal is output to said transmission line.

16. A transmission/reception method comprising the steps of:
decoding a stream received from a transmission line;
monitoring a storage amount of a buffer unit, in which a medium signal obtained by the decoding is stored, and outputting a control signal to said transmission line, if the storage amount exceeds or falls below a predetermined threshold;
outputting a stream obtained by receiving and encoding a medium signal, to said transmission line; and
performing control to change a compression rate of said encoder unit and output the stream, when the control signal is received from said transmission line.

17. A transmission/reception method comprising the steps of:
decoding a stream received from a transmission line;
monitoring a storage amount of a buffer unit, in which a medium signal obtained by the decoding is stored, and outputting a control signal to said transmission line, if the storage amount exceeds or falls below a predetermined threshold;
outputting a stream obtained by receiving and encoding a medium signal; and
performing output control of stream, when the control signal is received from said transmission line, so that the stream is output to transmission line at a time interval different from a time interval at which the medium signal has been encoded.

18. A transmission/reception method comprising the steps of:
decoding a stream received from a transmission line;
monitoring a reception status of said transmission line and outputting a control signal to said transmission line if the reception status becomes a predetermined status;
outputting a stream obtained by performing encoding processing for a medium signal; and
changing a compression rate of the encoding processing and outputting the stream, when the control signal is received from said transmission line.

19. A transmission/reception method comprising the steps of:
decoding a stream received from a transmission line;
monitoring a reception status of said transmission line and, if the reception status becomes a predetermined status, outputting a control signal to said transmission line;
outputting a stream, obtained by receiving and encoding a medium signal; and
performing output control of stream, when the control signal is received from said transmission line, so that the stream is output to said transmission line at a time interval different from a time interval at which the medium signal has been encoded.

20. The transmission/reception method according to claim 18 or 19, wherein, when a wireless status of said transmission line indicates a handover from a current wireless area to an adjacent cell, the control signal is output to said transmission line.

21. A program causing a computer, which constitutes a transmission device, to executes the processing of:
outputting a stream obtained by receiving and encoding a medium signal, to a transmission line; and
performing control to output the stream by changing a compression rate of the encoding processing when a predetermined control signal is received from said transmission line.

22. A program causing a computer, which constitutes a transmission device, to execute the processing of:
outputting a stream obtained by receiving and encoding a medium signal; and
when transmitting the stream after encoding, performing output control of stream, on receipt of a predetermined control signal from a transmission line, so that the stream is output to said transmission line at a time interval different from a time interval at which the medium signal has been encoded by the encoding processing.

23. A program causing a computer, which constitutes a reception device receiving a stream transmitted from a transmission device to a transmission line, to execute the processing of:
decoding a stream received from said transmission line; and
monitoring a storage amount of a buffer unit, in which a decoded medium signal is stored, and outputting a control signal to said transmission line, if the storage amount exceeds or falls below a predetermined threshold.

24. A program causing a computer, which constitutes a reception device receiving a stream transmitted from a transmission device to a transmission line, to execute the processing of:
decoding a stream received from said transmission line; and
monitoring a reception status of said transmission line and output a control signal to said transmission line, if the reception status becomes a predetermined status.

25. A transmission device that receives information data, including audios and/or images, as an input, performs encoding processing of the input data, creates distribution data and distributes the distribution data via a wired and/or wireless transmission line, said transmission device comprising:
means for controlling an output in such a way that, when a predetermined control signal is received from said transmission line, a compression rate of the encoding processing is changed or the distribution data is output at a time interval different from a time interval at which the input data has been encoded by the encoding processing.

26. A reception device comprising means for receiving and decoding the distribution data distributed from the transmission device according to claim 25 to said transmission line, said reception device further comprising means for monitoring a status of a storage amount of a storage device in which the received data is stored or a status of reception from said transmission line and, based on the monitor result, transmitting the control signal to said transmission device via said transmission line.

27. A transmission/reception system comprising the transmission device according to claim 25 and the reception device according to claim 26.

28. An image data transmission device comprising:
an encoder that outputs image encoded data obtained by receiving and encoding an image signal; and
a control unit for performing control such that, when a control signal is received from a transmission line, the encoder is caused to change a compression rate thereof to output the image encoded data to said transmission line or the image encoded data is output to said transmission line at a time interval different from a time interval at which the image encoded data has been encoded by said encoder.

29. An image data reception device comprising:
a decoder for decoding image encoded data received from a transmission line;
a buffer for storing an image signal, obtained through the decoding by said decoder; and
a control unit for outputting a control signal to said transmission line, based on a storage amount of said buffer or a monitor result of a reception status of said transmission line.
